Europäisches Patentamt

European Patent Office

Office européen des brevets

(11) Veröffentlichungsnummer: **0 440 178 A1**

## (12) EUROPÄISCHE PATENTANMELDUNG

(21) Anmeldenummer: 91101171.6

(22) Anmeldetag: 30.01.91

(51) Int. Cl.⁵: **B05D 3/06**, B05D 7/02

(30) Priorität: 31.01.90 DE 4002682

(43) Veröffentlichungstag der Anmeldung:
07.08.91 Patentblatt 91/32

(84) Benannte Vertragsstaaten:
AT BE CH DE DK ES FR GB GR IT LI NL SE

(71) Anmelder: **Herberts Gesellschaft mit
beschränkter Haftung
Christbusch 25
W-5600 Wuppertal 2(DE)**

(72) Erfinder: **Bastian, Udo, Dr.
Backhausfeld 25
W-4030 Ratingen 1(DE)**
Erfinder: **Gellert, Bernd, Dr.
Lindenhof
CH-5405 Baden(CH)**

(74) Vertreter: **Türk, Gille, Hrabal
Brucknerstrasse 20
W-4000 Düsseldorf 13(DE)**

(54) **Verfahren zum Beschichten von Substraten mit durch UV-Strahlung härtbaren Überzugsmitteln.**

(57) Temperaturempfindliche und/oder lichtempfindliche Substrate werden mit einem üblichen durch UV-Strahlung härtbaren Überzugsmittel beschichtet, daß einen Photoinitiator enthält, worauf mit annähernd monochrometischem Licht aus dem Wellenlängenbereich van 190 bis 400 nm gehärtet wird.

EP 0 440 178 A1

Rank Xerox (UK) Business Services

# VERFAHREN ZUM BESCHICHTEN VON SUBSTRATEN MIT DURCH UV-STRAHLUNG HÄRTBAREN ÜBERZUGSMITTELN

Die Erfindung betrifft ein Verfahren zum Beschichten von Substraten mit durch UV-Strahlung härtbaren Überzugsmitteln und Aushärten durch Bestrahlen mit UV-Licht. Sie ist auf die Beschichtung von temperaturempfindlichen und/oder lichtempfindlichen Substraten, wie Kunststoffsubstraten oder folienförmigen Substraten gerichtet, ohne eine Beeinträchtigung dieser empfindlichen Substrate zu bewirken.

Die Beschichtung von Substraten mit durch UV-Strahlung härtbaren Überzugsmitteln ist bekannt. Bisher wurden derartig beschichtete Substrate mit dem Licht von Quecksilber-Hochdruckstrahlern und Quecksilber-Mitteldruckstrahlern ausgehärtet. Hierzu wurde der gesamte UV-Spektralbereich von etwa 190 - 400 nm eingesetzt. Aus diesem gesamten Spektralbereich wurde allerdings nur ein geringer Anteil für die Aushärtung der Überzugsmittel benötigt; es handelte sich dabei insbesondere um den Bereich über 360 nm. Bei dieser Verfahrensweise wurden die zu beschichtenden Substrate einer überschüssigen Energie ausgesetzt, die sich sehr schädlich auswirken konnte. So fand im Belichtungsraum eine unerwünschte deutliche Erwärmung der Apparatur und der beschichteten Substrate statt. Es traten daher häufig Schäden am Beschichtungsmaterial und insbesondere an temperatur- und lichtempfindlichen Substraten, wie beispielsweise bahnförmigen bzw. folienförmigen Materialien, wie Papier und Kunststoff-Folien, auf. Bei der Härtung derartiger Materialien war es daher notwendig, entweder mit sehr hohen Transportgeschwindigkeiten zu arbeiten, die häufig zu unzureichender Aushärtung und damit verbundener Geruchsbelästigung und zu Toxizitätsproblemen führten, oder zusätzliche Kühlvorrichtungen zu installieren, die zu hohen apparativen Kosten und Betriebskosten führten. Darüberhinaus erfolgte beispielsweise durch eine Wasserkühlung eine Teilabsorption der zur Härtung notwendigen UV-Emission. Bei kontinuierlicher Arbeitsweise war es im Falle eines Stillstandes der Transportvorrichtung praktisch nicht zu. vermeiden, daß empfindliche Substrate durch Verschmoren zerstört wurden und darüberhinaus gefährliche Abgase freigesetzt wurden. Ferner ergaben sich Schäden an der Transportvorrichtung, am Strahler, sowie erhebliche Zeitverluste durch Reinigung der Anlage und Neueinführung der Substrate.

Als weiterer Nachteil der bisherigen Verfahrensweise ist die Bildung großer Mengen an Ozon zu nennen. Hierdurch trat einerseits eine schnelle Oxidation der Apparateteile sowie sehr häufig eine Inhibierung der UV-Überzugsmittel, insbesondere bei sehr dünnen Schichten von beispielsweise <10 $\mu$m auf.

Aufgabe der Erfindung ist die Bereitstellung eines Verfahrens zur Beschichtung von Substraten mit UV-härtbaren Überzugsmitteln, bei dem temperatur- und lichtempfindliche Substrate ohne Schädigung und ohne aufwendige Schutzmaßnahmen wirksam ausgehärtet und mit einem einwandfreien Überzug versehen werden können.

Es hat sich gezeigt, daß diese Aufgabe gelöst werden kann durch das eingangs definierte Verfahren, das dadurch gekennzeichnet ist, daß man auf temperaturempfindliche und/oder lichtempfindliche Substrate ein übliches durch UV-Strahlung härtbares Überzugsmittel, das einen Photoinitiator enthält, aufbringt und die Aushärtung mit annähernd monochromatischem Licht aus dem Wellenbereich von 190 - 400 nm durchführt.

Besonders geeignet ist das erfindungsgemäße Verfahren für die Beschichtung von Substraten aus temperatur- und lichtempfindlichen Materialien, insbesondere Kunststoffen, wie Polyester, Polyvinylchlorid (PVC), Polyolefine und Polyamide sowie Papier und metallisierte Folien. Derartige Substrate können in Form verschiedener geformter Gegenstände, z.B. als Formkörper (wie Flaschen) oder als Folie vorliegen.

Besonders geeignet ist das erfindungsgemäße Verfahren für die Beschichtung von bahnförmigen Materialien oder Folien. Derartige Materialien sind wegen der geringen Dicke besonders empfindlich gegen Verformungen insbesondere durch Wärme- und Lichteinwirkung. Derartige bahnförmige Substrate oder Folien können aus verschiedenen Materialien bestehen, wie beispielsweise den vorstehend erwähnten Kunststoffen, insbesondere Polyesterfolien, Polyvinylchloridfolien, Polyamidfolien. Es kann sich jedoch auch um dünne Metallfolien, wie beispielsweise Aluminiumfolien und/oder Papier sowie derartige beschichtete Materialien, wie beschichtete Papiere, beschichtete Kunststoff- und/oder Metallfolien handeln.

Weitere temperatur- und lichtempfindliche Materialien, für die das erfindungsgemäße Verfahren geeignet ist, sind keramikähnliche Materialien, wie sie beispielsweise in elektronischen Bauteilen eingesetzt werden. Auch in elektronischen Bauteilen enthaltene Metall- und Kunststoffteile sind häufig temperatur- und lichtempfindlich, so daß die erfindungsgemäße Verfahrensweise auch für die Behandlung derartiger Materialien besonders günstig geeignet ist. Dies gilt beispielsweise auch für die Beschichtung von Außenoberflächen von Körpern, die derartige empfindliche Materialien in ihrem Inneren enthalten.

In der Praxis kann das erfindungsgemäße Verfahren beispielsweise besonders geeignet sein zur Beschichtung von elektronischen Bauteilen und Aufzeichnungsmaterialien, die verschiedene Formen haben können, wie beispielsweise folienförmige Materialien. Beispiele hierfür sind Kondensatoren, Compaktdiscs, Speichermedien für Computer, wie ROM-Discs und Leiterplatten. Solche Materialien können aus metallbeschichteten Substraten, beispielsweise Metallfolien bestehen. Günstig wird die Erfindung auf Substrate angewendet, die Metalle in aufgedampfter Form aufweisen.

Zur Beschichtung der erfindungsgemäß einsetzbaren temperaturempfindlichen und/oder lichtempfindlichen Substrate können übliche durch UV-Strahlung härtbare Überzugsmittel eingesetzt werden, die dem Fachmann geläufig sind. Die Überzugsmittel unterliegen keiner Einschränkung. Es kann sich sowohl um radikalisch als auch um ionisch polymerisierbare Überzugsmittel handeln. Beispiele sind übliche UV-härtbare Lacke auf der Basis von Monomeren, Oligomeren, Polymeren, Copolymeren oder Kombinationen davon, mit einer oder mehreren olefinischen Doppelbindungen, wie beispielsweise Acrylsäure- und Methacrylsäureester; Beispiele hierfür sind Butyl(meth)acrylat, Dipropylenglykoldi(meth)acrylat, Trimethylolpropantri(meth)acrylat. Der hier verwendete Ausdruck (Meth)acrylat bedeutet Acrylate und/oder Methacrylate. Beispiele für Oligomere oder Prepolymere sind (Meth)acrylfunktionelle (meth)acrylcopolymere, Epoxidharz(meth)acrylate z.B. Umsetzungsprodukte aus 2 Mol(meth)acrylsäure und handelsüblichen Epoxidharzen, wie z.B. Epicote 828, Polyester(meth)acrylate, Polyether(meth)acrylate, Urethan(meth)acrylate, Amin(meth)acrylate, ungesättigte Polyester, ungesättigte Polyurethane, Silicon(meth)acrylate oder Kombinationen davon. Beispiele für derartige härtbare Produkte sind in folgenden Literaturstellen beschrieben: Epoxyacrylate in EP-A-0 033 896, EP-A-0 049 922 und US-A-4 485 123; Urethanacrylate in EP-A-0 053 749, EP-A-0 209 684 und US-A-4 162 274; Polyesteracrylate in EP-A-0 083 666, EP-A-0 154 924 und US-A-3 968 309, Siliconacrylate in DE-A-38 10 140; DE-A-38 20 294. Beispiele für ionisch, insbesondere kationisch härtbare Überzugsmittel sind UV-härtbare übliche Lacke auf der Basis von Epoxidmonomeren und Epoxidpolymeren und -copolymeren, sowie Gemischen davon, z.B. Epoxidharze auf der Basis von Umsetzungsprodukten von Bisphenol A mit Glycidylethern. Beispiele für derartige übliche UV-härtbare Überzugsmittel sind in folgenden Literaturstellen beschrieben: DE-A-29 47 734 und EP-A-0 075 537.

Das erfindungsgemäße Verfahren ist sehr gut sowohl für radikalisch als auch für ionisch polymerisierbare Überzugsmittel geeignet. Ein besonderer Vorteil ergibt sich bei ionisch, insbesondere kationisch polymerisierbaren Bezugsmitteln, wie Epoxidharzen. Derartige Harze konnten bisher mittels UV-Strahlung nur vorgehärtet werden und erforderten anschließend lange Nachhärtungszeiten bis zur vollständigen Aushärtung. Die vollständige Aushärtung erfolgte durch längeres Stehenlassen oder durch Wärmebehandlung. Hierdurch konnte eine Versprödung des Überzuges erfolgen und eine Schädigung temperaturempfindlicher bzw. lichtempfindlicher Substrate auftreten. Dies kann überraschenderweise durch die vorliegende Erfindung vermieden werden, die zu einer raschen und problemlosen Aushärtung derartiger ionisch photopolymerisierbarer Harze führt.

Die für das erfindungsgemäße Verfahren eingesetzten Überzugsmittel enthalten Photoinitiatoren. Es handelt sich hierbei um übliche Initiatoren wie sie für die radikalische und die ionische Polymerisation eingesetzt werden. Geeignet sind die Initiatoren, die im Wellenlängenbereich von 190 bis 400 nm und insbesondere im Wellenlängenbereich von 190 bis 355 nm, besonders bevorzugt 220 bis 355 nm, absorbieren. Es hat sich gezeigt, daß es günstig ist solche Initiatoren zu verwenden, die im Bereich des eingesetzten annähernd monochromatischen UV-Lichts absorbieren. Besonders bevorzugte Absorptionsbereiche sind der vorstehend genannte Bereich von 190 bis 355 nm, besonders bevorzugt 220 bis 355 nm, wobei besonders bevorzugte Beispiele bei annähernd 254, 308 und 354 nm liegen.

Beispiele für verwendbare radikalische Initiatoren sind chlorhaltige Initiatoren, wie chlorhaltige aromatische Verbindungen, z.B. beschrieben in US-A-4 089 815; aromatische Ketone, wie in US-A-4 318 791 oder EP-A-0 003 002 und EP-A-0 161 463 beschrieben; Hydroxyalkylphenone, wie in US-A-4 347 111 beschrieben; Phosphanoxide, wie in EP-A-0 007 086 und 0 007 508 beschrieben; wasserlösliche Initiatoren, beispielsweise auf der Basis von Hydroxyalkylphenonen, wie in US-A-4 602 097 beschrieben; ungesättigte Initiatoren, wie OH-funktionelle aromatische Verbindungen, die beispielsweise mit Acrylsäure verestert wurden, wie in US-A-3 929 490, EP-A-0 143 201 und EP-A-0 341 560 beschrieben; oder Kombinationen von derartigen Initiatoren, wie sie beispielsweise in US-A-4 017 652 beschrieben werden.

Die für radikalische Polymerisationen verwendeten Initiatoren sind, wie die vorstehend genannten Beispiele zeigen, vorwiegend Ketone. Derartige Initiatoren weisen im allgemeinen ein Absorptionsmaximum, bedingt durch die Ketonfunktion, in der Größenordnung von 250 bis 255 nm auf. Als Vorteil des erfindungsgemäßen Verfahrens ergibt sich somit, daß praktisch sämtliche ketonhaltigen Initiatoren für radikalisch polymerisierbare Materialien eingesetzt werden können, wenn mit annähernd monochromatischem Licht aus diesem Wellenlängenbereich bestrahlt wird. Hierdurch ergibt sich ein Vorteil im Vergleich mit der bisherigen Härtung im vollem UV-Spektralbereich, bei dem die spezielle Absorption der Ketonbande der Initiatoren nur wenig ausgenutzt werden konnte und es somit häufig notwendig war, für spezielle Reaktionen spezielle Initiatoren einzusetzen.

Beispiele verwendbarer kationischer Initiatoren sind Triarylsulfoniumsalze der allgemeinen Formel

$$(Aryl)_3 \ S^+ \ X^-$$

worin Aryl einen Arylrest, wie den Phenylrest, darstellt und $X^-$ ein Anion ist, wie $SbF_6^-$, $PF_6^-$, $AsF_6^-$ und $BF_4^-$, wie in US-A-4 417 061, EP-A-0 327 194 und DE-A-2 904 626 beschrieben. Weitere Beispiele für kationische Initiatoren sind Iodoniumsalze und Diazoniumsalze, wie sie beispielsweise in folgenden Literaturstellen beschrieben werden: US-A-4 421 904, EP-A-0 145 653, EP-A-0 310 881 und EP-A-0 310 882 (Iodoniumsalze); DE-A-3 808 590 und DE-A-3 808 591 (Diazoniumsalze).

Außer diesen Initiatoren können auch Metallocen-Komplexe eingesetzt werden, wie z.B. beschrieben in EP-A-0 094 915.

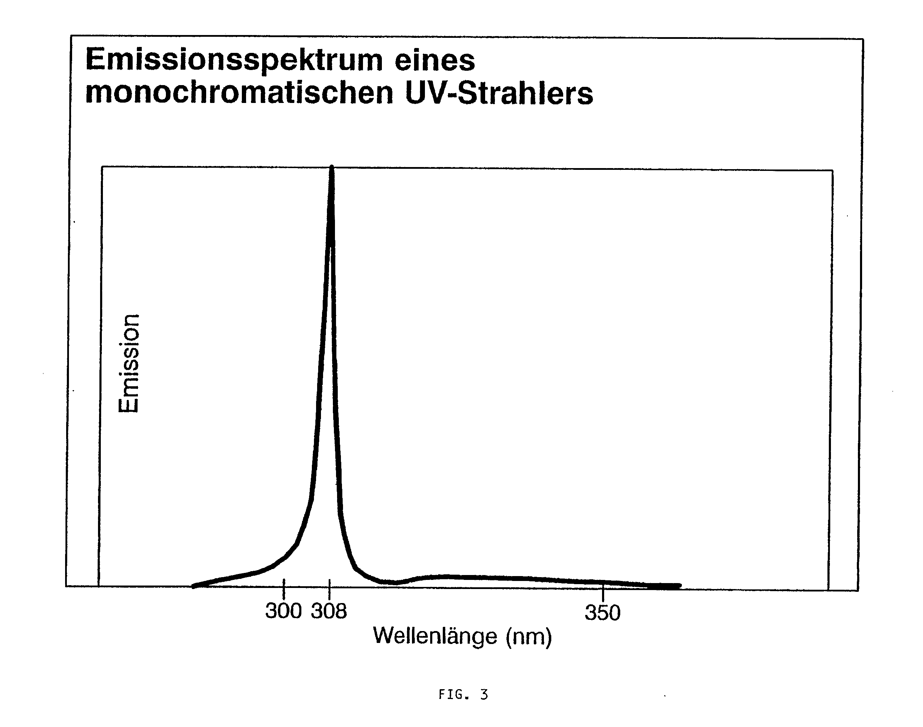

Beim erfindungsgemäßen Verfahren werden die auf das empfindliche Substrat aufgebrachten Photoinitiatoren enthaltenen Überzugsmittel mit annähernd monochromatischem Licht aus dem Wellenlängenbereich von 190 bis 400 nm gehärtet. Bevorzugt wird das annähernd monochromatische Licht aus dem Bereich von 190 bis 355 nm und insbesondere von 220 bis 355 nm gewählt; wobei besonders bevorzugte Wellenlängen bei etwa 254, 308 und 354 nm liegen. Unter annähernd monochromatischem Licht wird hier Licht verstanden, dessen Wellenlänge einen Bereich von maximal 20 nm umfaßt. Die beigefügte Figur 3 stellt ein typisches Beispiel für annähernd monochromatisches Licht dar. An der Abzisse ist die Wellenlänge in nm und an der Ordinate die Emission aufgetragen. Die Wellenlänge liegt bei 300 bis 315 nm mit einem Maximum bei 308 nm.

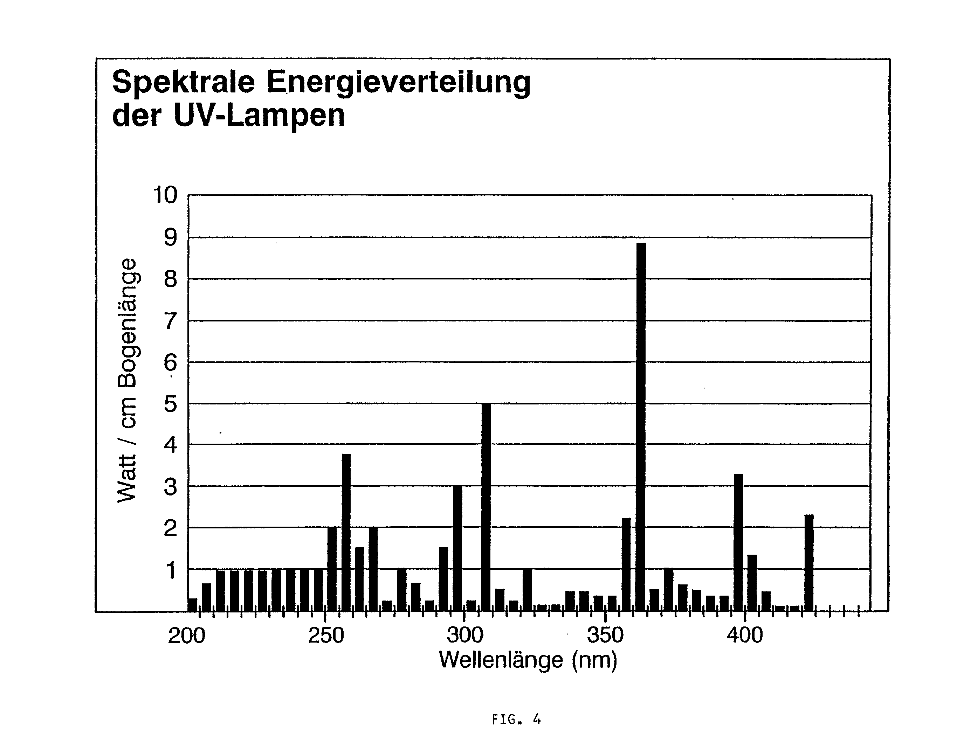

Im Gegensatz hierzu stellt die Figur 4 ein typisches Beispiel für nach dem Stand der Technik zur UV-Härtung verwendete UV-Strahlung dar. Der Wellenlängenbereich liegt bei 190 bis 437 nm mit zahlreichen Maxima, wodurch eine optimale Verwertung zu Polymerisaten nicht möglich ist. Zudem weist das in im Stand der Technik verwendete UV-Licht, das von üblichen UV-Strahlern stammt, einen hohen Anteil an sichtbarem Licht und IR-Strahlung auf, so daß die zu härtenden Materialien einer unnötigen Wärmeeinwirkung ausgesetzt werden. Dies ist besonders dann ungünstig, wenn Überzüge auf wärmeempfindlichen Substraten gehärtet werden sollen. Die erfindungsgemäße Verfahrensweise eignet sich daher besonders zur Beschichtung von temperaturempfindlichen und/oder lichtempfindlichen Substraten.

Das für die erfindungsgemäße Härtung verwendete annähernd monochromatische Licht kann auf verschiedene Weise erzeugt werden. Es ist günstig, UV-Strahler einzusetzen, die ohne besondere Filtereinrichtungen monochromatisches Licht ausstrahlen. Derartige Hochleistungsstrahler werden beispielsweise in der EP-A-0 254 111 und in der EP-A-0 312 732 beschrieben. Hierbei handelt es sich im Prinzip um Strahler, die auf der Basis stiller elektrischer Ladungen in einem mit einem Edelgas oder Gasgemisch gefüllten Entladungsraum arbeiten. Der Entladungsraum wird durch ein Dielektrikum und Elektroden begrenzt, wobei sowohl das Dielektrikum, als auch die auf der dem Entladungsraum abgewandten Oberfläche des Dielektrikums liegenden Elektroden für die durch die stille elektrische Entladung erzeugte Strahlung transparent sind. Je nach Edelgasfüllung strahlen derartige Strahler annähernd monochromatisches UV-Licht in verschiedenen Wellenlängenbereichen, insbesondere den vorstehend als bevorzugt angegebenen, ab.

Zur Durchführung des erfindungsgemäßen Verfahrens werden die beschichteten temperatur- und/oder lichtempfindlichen Substrate an der annähernd monochromatisches Licht ausstrahlenden UV-Lichtquelle vorbeigeführt. Die Bestrahlungszeiten liegen im Sekundenbereich sowie bei Bruchteilen von Sekunden.

Die erfindungsgemäße Beschichtung von Substraten kann kontinuierlich erfolgen. Beispielsweise kann die Beschichtung des Substrates auf einem Förderband mittels üblicher Auftragsvorrichtungen erfolgen, wobei das Förderband anschließend an der Lichtquelle für annähernd monochromatisches UV-Licht vorbeigeführt wird. Auf diese Weise können bahnförmige Materialien und Formkörper beschichtet und gehärtet werden. Im Falle der Beschichtung von Folien, wie Kunststoff-Folien, Metallfolien und Papierfolien, können diese bahnförmig vorliegen und als Bahn anstelle eines Transportbandes der Beschichtung und anschließenden Härtung zugeführt werden. Formkörper, wie beispielsweise Hohlkörper, z.B. Flaschen, können auch kreisförmig der Beschichtung und anschließenden Härtung sowie gegebenenfalls Vor- und Nachbehandlungen zugeführt werden.

Im Stand der Technik sind Versuche beschrieben, die Oberflächen von Substraten, die mit durch UV-Strahlung härtbaren Überzugsmitteln beschichtet werden sollen, durch Bestrahlen vor der Beschichtung zu aktivieren. Die Bestrahlung mit dem bisher verwendeten UV-Licht mit breiten Spektralbereichen hat sich, auch in Gegenwart eines Photoinitiators, als wenig wirksam erwiesen. In der Praxis mußte daher bisher auf eine Corona-Vorbehandlung zurückgegriffen werden.

Überraschenderweise hat es sich im Rahmen der vorliegenden Erfindung gezeigt, daß die Vorbehandlung mit monochromatischem UV-Licht die Wirkung der Corona-Strahlung ersetzt. Eine derartige Vorbehandlung kann mit und ohne Initiatorbehandlung der Substratoberfläche erfolgen.

Die Vorbehandlung mit monochromatischem UV-Licht erfolgt so, daß das zu beschichtende Substrat unmittelbar vor der Beschichtung einer kurzzeitigen Belichtung mit monochromatischem UV-Licht unterzogen wird. Dies läßt sich besonders günstig im kontinuierlichen Verfahren durchführen. Eine Initiatorvorbehandlung ist dabei nicht notwendig, sie ist jedoch günstig. Die Initiatorvorbehandlung erfolgt beispielsweise durch Auflösen eines Initiators (z.B. Benzophenon) in einem geeigneten Lösungsmittel und Auftrag (beispielsweise Sprühauftrag) der so erhaltenen Lösung auf die Substratoberfläche. Anschließend wird das verwendete Lösungsmittel verdampft und das so behandelte Substrat wird anschließend der Bestrahlung mit annähernd monochromatischem UV-Licht unterworfen. Als Initiatoren verwendet man solche, die bei der Wellenlänge des verwendeten annähernd monochromatischen UV-Lichtes absorbieren. Beispiele sind die vorstehend für den Zusatz zu den polymerisierenden Massen genannten Initiatoren. Die Initiatoren werden in sehr geringen Mengen auf die Substratoberfläche aufgetragen. Im allgemeinen werden Lösungen von 1 bis 10 Gew.-% angesetzt und diese Lösungen derart aufgetragen, daß auf den Oberflächen der Substrate nur katalytische Initiatormengen zurückbleiben.

Bei der kontinuierlichen Durchführung des erfindungsgemäßen Verfahrens kann somit das auf der Transportbahn befindliche Substrat oder das bahnförmige Substrat zunächst (gegebenenfalls nach Vorbehandlung mit einem Photoinitiator) an einer monochromatisches UV-Licht ausstrahlenden Lichtquelle vorbeigeführt werden, wonach die vorstehend beschriebene Beschichtung mit Lack und Aushärtung mit dem monochromatischen UV-Licht erfolgen.

Als besondere Vorteile des erfindungsgemäßen Verfahrens hat es sich gezeigt, daß es möglich ist Überzüge auf temperatur- und/oder lichtempfindlichen Substraten zu härten, die aus pigmenthaltigen Überzugsmitteln gebildet wurden. Die Härtung pigmentierter UV-Lacke war bisher problematisch. Es mußten im langwelligen Bereich absorbierende Initiatoren eingesetzt werden, um eine Durchhärtung der pigmentierten Schicht zu ermöglichen. Der Einsatz spezieller im langwelligen absorbierender Initiatoren wird durch die erfindungsgemäße Arbeitsweise überwunden, die es ermöglicht, mit üblichen Initiatortypen zu einer einwandfreien Aushärtung pigmentierter Überzüge zu führen.

Vorstehend wurde davon ausgegangen, daß das erfindungsgemäße Verfahren mit Licht annähernd monochromatischer Wellenlängen durchgeführt wird. Selbstverständlich ist es beim erfindungsgemäßen Verfahren auch möglich, mit verschiedenen Lichtquellen gleichzeitig oder hintereinander auszuhärten und/oder vorzubehandeln, die annähernd monochromatisches Licht mit unterschiedlichen Wellenlängen ausstrahlen.

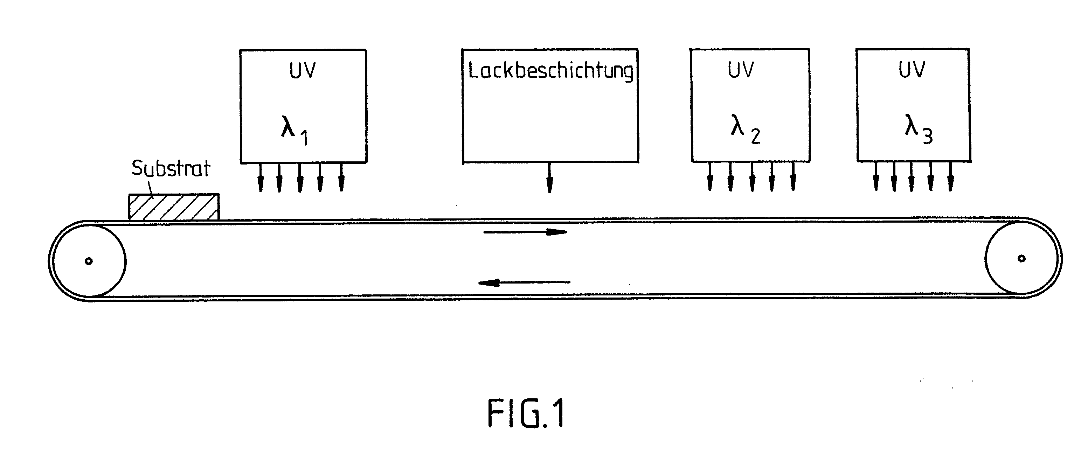

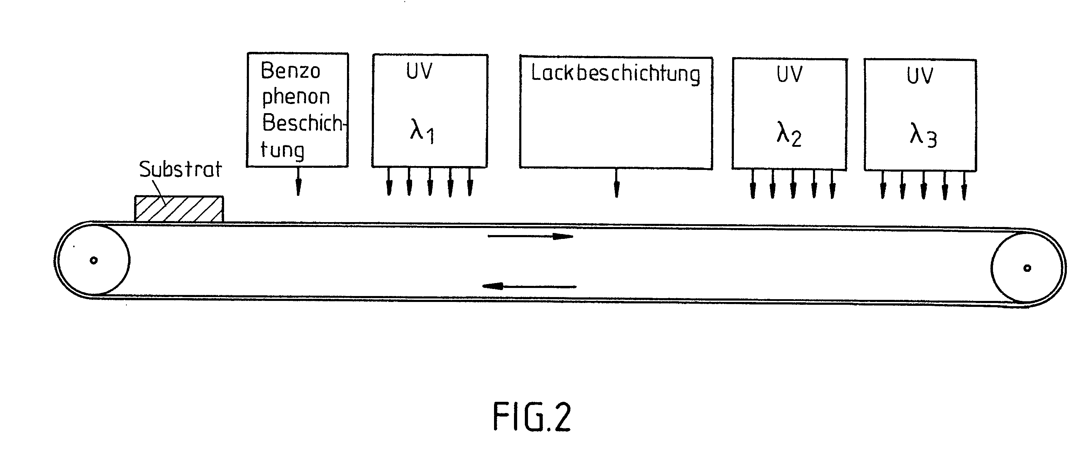

Die beigefügten Figuren 1 und 2 stellen ein Reaktionsschema dar, daß die kontinuierliche Durchführung des erfindungsgemäßen Verfahrens ermöglicht. Dabei ist in die Figur 1 eine Vorbehandlung mit UV-Licht annähernd monochromatischer Natur mit aufgenommen; wobei eine derartige Vorbehandlung lediglich ein Beispiel darstellt und nicht dringend erforderlich ist. In der Figur 2 wird eine vorausgehende Behandlung mit einem Initiator (beispielsweise Benzophenon) dargestellt.

In Figur 1 wird ein Substrat auf einem Förderband unter einer ersten UV-Lichtquelle vorbeigeführt, die annähernd monochromatisches Licht mit der Wellenlänge $\lambda 1$ ausstrahlt. Unmittelbar anschließend erfolgt die Beschichtung mit Lack, worauf sich eine zweite und gegebenenfalls dritte UV-Lichtquelle anschließen, die annähernd monochromatisches Licht mit der Wellenlänge $\lambda 2$ bw. $\lambda 3$ ausstrahlen. Bei dieser Verfahrensweise können die emittierten Wellenlängen $\lambda 1$, $\lambda 2$ und $\lambda 3$ sein, teilweise gleich oder voneinander verschieden sein. Das Transportband kann bei dieser Ausführungsform durch das zu beschichtende Substrat ersetzt sein, falls dieses bahnförmig vorliegt und von einer links in der Figur liegenden Rolle zur rechts liegenden Rolle transportiert wird.

Die Figur 2 zeigt die gleichen Verfahrensschritte wie die Figur 1, wobei jedoch vor der Vorbehandlung mit UV-Licht der Wellenlänge $\lambda 1$ eine Beschichtung mit einem Photoinitiator (im Beispiel Benzophenon) mit anschließender (nicht gezeigter) Abdunstung des für den Photoinitiator verwendeten Lösungsmittels, erfolgt.

Die folgenden Beispiele dienen zur Erläuterung der Erfindung:

## Beispiel 1

Dünne Folien aus Polyester und Polyvinylchlorid (Schichtdicke >10 $\mu$m) wurden bahnförmig mit einer Bandgeschwindigkeit von 1 m/min bis 10 m/min in eine Vorrichtung eingeführt, wie sie in der Figur 1 dargestellt wird, wobei jedoch keine Vorbehandlung mit Initiator und annähernd monochromatischem Licht erfolgte. Die Beschichtung erfolgte mit einem UV-Klarlack auf der Basis von 85 Gew.-

Teilen Epoxyacrylat (Handelsprodukt Roskydal® LS 2812), im Gemisch mit 17 Gew.-Teilen Dipropylenglykoldiacrylat und einem Gehalt von 3 Gew.-Teilen Photoinitiator (Handelsprodukt Darocur® 1173 mit einer maximalen Absorption bei 254 nm). Die Aushärtung erfolgte durch Excimerstrahler mit einer Kryptonfluoridfüllung (Emission bei 253 nm). Die Aushärtung konnte auch mit einer Chlorfüllung des Excimerstrahlers (Emission bei 249 nm) durchgeführt werden.

Die erhaltene Beschichtung war vollständig ausgehärtet, geruchsfrei und es fand keine Verformung der Folie statt.

Beispiel 2

Wie im Beispiel 1 wurden Polyesterfolien und Polyamidfolien mit einem UV-Klarlack beschichtet. Der Klarlack basierte auf 85 Gew.-Teilen Polyesteracrylat (Laromer® PE 55 F) im Gemisch mit 17 Gew.-Teilen Dipropylenglykoldiacrylat und 3 Gew.-Teilen Photoinitiator (Handelsprodukt Irgacure® 907 mit einer maximalen Absorption bei 308 nm). Der eingesetzte Strahler basierte auf Xenonchlorid mit einer maximalen Emission bei 308 nm. Die Bandgeschwindigkeit betrug 1 m/min bis 5 m/min. Wie im Beispiel 1 wurden einwandfreie Beschichtungen ohne Verformung der Folien erhalten.

Beispiel 3

Wie im Beispiel 1 wurde Papier mit einem UV-Klarlack beschichtet. Der UV-Klarlack basierte auf 85 Gew.-Teilen Urethanacrylat (Ebecryl® 220),17 Gew.-Teilen Dipropylenglykoldiacrylat und 3 Gew.-Teilen Benzophenon als Photoinitiator (Absorptionsmaximum bei 254 nm). Es wurde ein Quecksilber-Niederdruckstrahler mit einer maximalen Emission von 254 nm verwendet.

Das Papier verließ den Härtungsraum bei Bandgeschwindigkeiten von 0,5 m/min bis <10 m/min unbeschädigt, mit einer einwandfrei ausgehärteten Beschichtung.

Beispiel 4

Folien aus Papier, Kunststoff und Metall wurden mit pigmentiertem UV-Lack auf der Basis von 85 Gew.-Teilen Epoxyacrylat (Roskydal ® LS 2812), 17 Gew.-Teilen Dipropylenglykoldiacrylat und 35 Gew.-Teilen Titandioxid beschichtet. Als Photoinitiatoren wurden die Handelsprodukte Lucirin® TPO und Darocur® 117.3, jeweils in Mengen von 1,5 Gew.-Teilen zugesetzt.

Die Absorptionsmaxima dieser Initiatoren liegen bei 360 nm bzw. bei 254 und 310 - 360 nm.

Es wurde ein Xenonchloridstrahler mit einer maximalen Emission bei 308 nm verwendet.

Die Substrate verließen unbeschädigt den Belichtungsraum. Die Lacke waren vollständig ausgehärtet bei Geschwindigkeiten von etwa 1 m/min.

Bei Durchführung dieses Beispiels mit weiteren organischen oder anorganischen Pigmenten, nämlich Heliogenblau, Heliogengrün, Ruß, Eisenoxid und Mischungen dieser Pigmente anstelle des Titandioxids, wurden in gleicher Weise gute Ergebnisse erzielt.

Beispiel 5

Papier, Kunststoff- und Metall-Folien wurden in gleicher Weise wie im Beispiel 1 beschrieben beschichtet. Der UV-Klarlack basierte auf 85 Gew.-Teilen eines Epoxidharzes auf Basis von Bisphenol A und 20 Gew.-Teilen Hexandioldiglycidylether mit einem Gehalt von 3 Gew.-Teilen Photoinitiator (Handelsprodukt Degacure® K I 85 mit einem Absorptionsmaximum bei 300 bis 320 nm. Als Strahler diente ein Xenonchloridstrahler mit einer maximalen Emission bei 308 nm. Bei einer Härtungsgeschwindigkeit von 0,5 m/min bis <10 m/min waren die Lacke vollständig ausgehärtet und die Substrate wurden nicht beschädigt.

Beispiel 6

Drahtförmige Materialien wurden mit einem UV-Klarlack auf der Basis von 80 Gew.-Teilen Epoxyacrylat (Handelsprodukt Roskydal® LS 2812) und 45 Gew.-Teilen Dipropylenglykoldiacrylat mit einem Gehalt von 3 Gew.-Teilen Photoinitiator Darocur® 1173 beschichtet. Als Strahler diente ein Xenonchloridstrahler mit einer maximalen Emission bei 308 nm. Der Strahler war rohrförmig ausgebildet. Das so beschichtete drahtförmige Material wurde durch den rohrförmigen Strahler mit einer Geschwindigkeit von 0,5 m/min bis <10 m/min geführt. Die Beschichtung war einwandfrei ausgehärtet.

Beispiel 7

Polyesterfolien wurden der in Figur 1 dargestellten Behandlung unterworfen; d.h. es wurde gearbeitet wie im vorstehend beschriebenen Beispiel 1, wobei jedoch eine Vorbehandlung mit dem annähernd monochromatischen UV-Licht erfolgte. Es wurde gearbeitet wie im Beispiel 1; als Strahler wurde ein Xenonchloridstrahler mit einer maximalen Emission bei 308 nm verwendet.

Die Haftung der einwandfrei ausgehärteten Lacke erwies sich nach Prüfung mit der Gitterschnittmethode als ausgezeichnet.

Gleiche Ergebnisse wurden unter Verwendung von Polyvinylchloridfolien, Polypropylenfolien und Polyethylenfolien erzielt sowie bei Austausch der Strahler durch einen Quecksilber-Niederdruck-Strahler mit einer maximalen Emission bei 254 nm.

**Patentansprüche**

1. Verfahren zum Beschichten von Substraten mit durch UV-Strahlung härtbaren Überzugsmitteln und Aushärtung durch Bestrahlen mit UV-Licht, **dadurch gekennzeichnet,** daß man auf temperaturempfindliche und/oder lichtempfindliche Substrate ein übliches durch UV-Strahlung härtbares Überzugsmittel, das einen Photoinitiator enthält, aufbringt und die Aushärtung mit annähernd monochromatischem Licht aus dem Wellenlängenbereich von 190 - 400 nm durchführt.

2. Verfahren nach Anspruch 1, dadurch gekennzeichnet, daß als temperaturempfindliche und/oder lichtempfindliche Substrate Kunststoffe in Form von Folien oder Formkörpern eingesetzt werden.

3. Verfahren nach Anspruch 1 oder 2, dadurch gekennzeichnet, daß als Substrate Folien aus Metall oder Papier beschichtet werden.

4. Verfahren nach Anspruch 2 oder 3, dadurch gekennzeichnet, daß die Folien bahnförmig eingesetzt werden und die Beschichtung kontinuierlich durchgeführt wird.

5. Verfahren nach einem der Ansprüche 1 bis 4, dadurch gekennzeichnet, daß mit annähernd monochromatischem Licht aus dem Wellenbereich von 190 bis 355 nm, bevorzugt von 220 bis 355 gehärtet wird.

6. Verfahren nach einem der Ansprüche 1 bis 5, dadurch gekennzeichnet, daß ein durch UV-Strahlung härtbares Überzugsmittel verwendet wird, das pigmentiert ist.

7. Verfahren nach einem der Ansprüche 1 bis 6, dadurch gekennzeichnet, daß die zu beschichtenden Substrate vor dem Aufbringen des durch UV-Strahlung härtbaren Überzugsmittels mit annähernd monochromatischem Licht aus dem Wellenbereich von 190 - 400 nm vorbehandelt werden.

8. Verfahren nach Anspruch 7, dadurch gekennzeichnet, daß die Vorbehandlung mit annähernd monochromatischem Licht aus dem Wellenbereich 190 bis 355 nm, bevorzugt 220 bis 355 nm, erfolgt.

9. Verfahren nach Anspruch 7 oder 8, dadurch gekennzeichnet, daß die Vorbehandlung in Anwesenheit eines Initiators durchgeführt wird.

10. Verfahren nach einem der Ansprüche 1 bis 8 oder 9, dadurch gekennzeiohnet, daß der Initiator ein Absorptionsmaximum bei der Wellenlänge des für die Aushärtung verwendeten annähernd monochromatischen Lichtes besitzt.

11. Verfahren nach einem der Ansprüche 1 bis 10, dadurch gekennzeichnet, daß die Aushärtung und gegebenenfalls Vorbehandlung mit zwei oder mehreren Lichtquellen für annähernd monochromatisches Licht aus dem Wellenlängenbereich von 190 - 400 nm durchgeführt wird, die bei unterschiedlichen Wellenlängen emittieren.

| UV $\lambda_1$ | Lackbeschichtung | UV $\lambda_2$ | UV $\lambda_3$ |

Substrat

**FIG.1**

FIG.2

EP 0 440 178 A1

**Emissionsspektrum eines monochromatischen UV-Strahlers**

Emission

300 308

350

Wellenlänge (nm)

FIG. 3

EP 0 440 178 A1

Spektrale Energieverteilung der UV-Lampen

FIG. 4

EP 0 440 178 A1

Europäisches
Patentamt

EUROPÄISCHER
RECHERCHENBERICHT

Nummer der Anmeldung

EP 91 10 1171

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 202 803 (COMMONWEALTH OF AUSTRALIA DEPT. OF INDUSTRY, TECHNOLOGY AND COMMERCE) * Beispiele; Ansprüche; Figuren * | 1-6 | B 05 D 3/06 B 05 D 7/02 |
| X | US-A-4 411 931 (C.H. DUONG) * Beispiele; Ansprüche * | 1-5 | |
| Y | | 7-11 | |
| Y | FR-A-2 121 735 (E.I. DU PONT DE NEMOURS AND CO.) * Beispiele; Anspüche * | 7-11 | |
| X | FR-A-2 230 831 (UNION CARBIDE CORP.) * Ansprüche * | 1,2,5 | |
| A | | 11 | |
| A | US-A-4 276 479 (H. MIBU et al.) * Ansprüche * | 11 | |

| RECHERCHIERTE SACHGEBIETE (Int. Cl.5) |
|---|
| B 05 D |

Der vorliegende Recherchenbericht wurde für alle Patentansprüche erstellt

| Recherchenort | Abschlußdatum der Recherche | Prüfer |
|---|---|---|
| Den Haag | 08 April 91 | BROTHIER J-A.L. |